(19) Europäisches Patentamt
European Patent Office
Office européen des brevets

(11) **EP 2 404 072 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **10704516.3**

(22) Anmeldetag: **17.02.2010**

(51) Int Cl.:
***F16D 3/224*** *(2011.01)*

(86) Internationale Anmeldenummer:
**PCT/EP2010/000971**

(87) Internationale Veröffentlichungsnummer:
**WO 2010/099867 (10.09.2010 Gazette 2010/36)**

(54) **GLEICHLAUFFESTGELENK**

CONSTANT VELOCITY FIXED JOINT

JOINT HOMOCINÉTIQUE FIXE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.03.2009 DE 102009011262**

(43) Veröffentlichungstag der Anmeldung:
**11.01.2012 Patentblatt 2012/02**

(73) Patentinhaber: **Volkswagen Aktiengesellschaft 38440 Wolfsburg (DE)**

(72) Erfinder:
• **SCHAAF, Gregor 38162 Cremlingen (DE)**
• **UHLE, Michael 38446 Wolfsburg (DE)**
• **JANSSEN, Ralf 38518 Neubokel (DE)**

(56) Entgegenhaltungen:
**EP-A1- 1 512 879        EP-A1- 2 119 930**
**EP-A1- 2 202 422        WO-A1-2004/090365**
**WO-A1-2009/145034       WO-A1-2010/061707**
**DE-A1-102004 062 843    GB-A- 2 269 439**

EP 2 404 072 B1

**Beschreibung**

Die Erfindung bezieht sich auf ein Gleichlauffestgelenk, umfassend ein Gelenkaußenteil mit einer Vielzahl von Kugellaufbahnen am Innenumfang, ein Gelenkinnenteil mit einer Vielzahl von Kugellaufbahnen am Außenumfang, einen zwischen dem Gelenkaußenteil und dem Gelenkinnenteil angeordneten Käfig mit einer Vielzahl von Fenstern, und Kugeln, die jeweils in einem Fenster des Käfigs angeordnet sind und mit den Kugellaufbahnen des Gelenkaußenteils und des Gelenkinnenteils zur Drehmomentübertragung in Eingriff stehen.

Derartige Gleichlauffestgelenke werden beispielsweise in Antriebsgelenkwellen von Kraftfahrzeugen eingesetzt. Um an einer gelenkten Achse den erforderlichen Lenkeinschlag zu gewährleisten, sind an radseitigen Gleichlauffestgelenken Gelenkbeugewinkel von mehr als 40° erforderlich.

Mit zunehmendem Beugewinkel nimmt jedoch die Bruchfestigkeit von Gleichlauffestgelenken stark ab, da die Kraftverteilung auf die Kugeln ungleichmäßiger wird und der Käfig, der für die Führung und Positionierung der Kugeln verantwortlich ist, höher belastet wird. Die Festigkeit des Kugelkäfigs bestimmt somit wesentlich die Bruchfestigkeit und den Einsatzbereich des Gelenks.

Die Wandstärke des Käfigs ist dabei ein wichtiger Einflussfaktor. Da jedoch bei großen Käfigwandstärken die Kugelumschlingung in den Kugellaufbahnen des Gelenkinnenteils und des Gelenkaußenteils abnimmt, kann dieser Parameter lediglich in einem sehr begrenzten Umfang genutzt werden, um die Festigkeit des Käfigs zu steigern, denn bei einer geringen Kugelumschlingung unter großen Beugewinkeln fällt die Tragfähigkeit der Kugellaufbahnen stark ab. Es ist daher von Vorteil für die Ermüdungslebensdauer, wenn die Käfigwandstärke lediglich die für die Kugelführung notwendige Wandstärke aufweist.

Wie in der DE 10 2005 029 042 A1 beschrieben, kann die Belastbarkeit des Käfigs gesteigert werden, indem der Öffnungsdurchmesser des Käfigs auf der Montageseite sehr klein ausgeführt wird, der Käfig sehr breit ausgeführt wird und die Ausrundungen der Käfigfenster mit möglichst großen Radien ausgeführt werden.

Für die Bruchfestigkeit des Käfigs sind insbesondere die Stege zwischen den Käfigfenstern von Bedeutung, da diese in der Regel die schwächsten Stellen am Käfig darstellen. Je kürzer die Fenster in Umfangsrichtung sind, desto breiter können die Stege ausgeführt werden. Im Idealfall entspräche die Länge der Fenster in Umfangsrichtung dem Durchmesser der Kugeln. Dieser Idealfall ist jedoch bei Gleichlauffestgelenken der eingangs genannten Art aus technischen Gründen unerreichbar.

Bei einem Umlauf des Gelenks unter großen Beugewinkeln verlagern sich die Kugeln entlang der Kugellaufbahnen, wobei stets alle Kugeln durch den Käfig in der Halbwinkelebene des Gelenks gehalten werden. Die Kugellaufbahnen sind dabei mehr oder weniger zum Gelenkbeugezentrum gekrümmt. Dies bedeutet, dass sich während eines Umlaufs unter Beugung die Kugeln den Drehachsen des Gelenkaußenteils und des Gelenkinnenteils annähern und von diesen wieder entfernen. Hierbei nimmt gleichzeitig der Abstand benachbarter Kugeln untereinander ab und wieder zu. Um ein Klemmen des Gelenks zu verhindern, müssen die Käfigfenster so ausgeführt werden, dass die dem maximalen Betriebsbeugewinkel des Gelenks entsprechenden Veränderungen des Abstands der Kugeln in Umfangsrichtung zugelassen werden.

Die benötigte Fensterlänge ergibt sich folglich aus der relativen Verlagerung der Kugeln in Umfangsrichtung. Je größer der Gelenkbeugewinkel ist, desto größer ist die Verlagerung der Kugeln in Umfangsrichtung. Der Abstand der Kugeln wird mit zunehmendem Beugewinkel immer ungleichmäßiger. Die Fensterlängen müssen für die maximalen Verlagerungen ausgelegt sein. Die Stege zwischen benachbarten Fenstern werden dementsprechend mit größeren maximalen Betriebsbeugewinkeln zwangsläufig schwächer, so dass die Bruchfestigkeit des Käfigs und des Gelenks abnimmt.

Desweiteren ist die Art und Weise der Montage der Gelenke zu berücksichtigen. Üblicherweise werden hierbei zunächst das Gelenkaußenteil, das Gelenkinnenteil und der Käfig zusammengebaut und hernach die Kugeln eingefügt. Für Letzteres wird das Gelenk über den maximalen Betriebsbeugewinkel hinaus überbeugt, so dass die Käfigfenster nacheinander für die Zuführung der Kugeln zugänglich sind. Die Kugeln werden nach dem jeweiligen Schwenken bzw. Positionieren der Bauteile einzeln nacheinander montiert. Die Ebene, die von den Kugelmittelpunkten aufgespannt wird, liegt dabei auf der Winkelhalbierenden der Bauteilachsen des Gelenkaußenteils und des Gelenkinnenteils. Ein üblicher Montagebeugewinkel ist etwa 10 bis 25° größer als der maximale Betriebsbeugewinkel. Die Montierbarkeit des Gelenks erfordert somit größere Fensterlängen, als für den maximalen Betriebsbeugewinkel erforderlich wären.

Die Stegbreite wird ferner durch die Größe der eingesetzten Kugeln beeinflusst. Kleinere Kugeln führen zu günstigeren Stegbreiten am Käfig. Jedoch fällt bei kleineren Kugeln die Lebensdauer des Gelenkes geringer aus.

In DE 198 43 632 A1 wird vorgeschlagen, durch Fasen an den Laufbahnenden des Gelenkaußenteils den Montagewinkel des Gelenkes zu verkleinern, wodurch in der Folge die Käfigfenster verkleinert werden können.

Desweiteren gibt es im Stand der Technik den Ansatz, die Fenster jeweils nur so groß auszuführen, wie es für die Montage der letzten Kugel erforderlich ist. Die letzte montierte Kugel kann dabei in ein kleineres Fenster eingesetzt werden. In einem solchen Fall kann beispielsweise die Hälfte der Fenster mit einer größeren Länge und die zweite Hälfte der Fenster mit einer kürzeren Länge ausgeführt werden. Die unterschiedlichen Längen sind dann üblicherweise abwechselnd angeordnet, wodurch eine gleichmäßige Stegbreite erreicht werden kann. Bei unterschiedlichen Fenstern muss jedoch bei der Montage auf die Orientierung der Bauteile geachtet werden, was einen nicht unerheblichen Zusatzaufwand bedeutet.

Aus der DE 42 34 488 C1 ist ferner eine asymmetrische Anordnung der Fenster bekannt.

Aus der WO 2004/090365 A1 ist weiterhin ein Gleichlauffestgelenk der gattungsgemäßen Art bekannt, bei dem bei einem Betriebsbeugewinkel desselben von etwa 30° ein geometrisches Verhältnis der Länge der Käfigfester in Umfangsrichtung des Käfigs gesehen zur Breite der Käfigfenster von größer 1,31 zu verzeichnen ist. Aus der GB 2 269 439 A ist ferner ein geometrisches Verhältnis in den Käfigfenstern von größer 1,62 zu entnehmen. Schließlich ist mit der DE 10 2004 062 843 A1 ein Gelenk mit einem Betriebsbeugewinkel von 35° oder kleiner offenbart, wobei das geometrische Verhältnis der Länge der Käfigfester in Umfangsrichtung des Käfigs gesehen zur Breite der Käfigfenster bei größer 1,25 liegt.

Vor diesem Hintergrund liegt der Erfindung die Aufgabe zugrunde, die Bruchfestigkeit eines Gleichlaufgelenks mit großem maximalen Betriebsbeugewinkel weiter zu erhöhen.

Diese Aufgabe wird durch ein Gleichlauffestgelenk gemäß Patentanspruch 1 gelöst. Das erfindungsgemäße Gleichlauffestgelenk umfasst ein Gelenkaußenteil mit einer Vielzahl von Kugellaufbahnen am Innenumfang, ein Gelenkinnenteil mit einer Vielzahl von Kugellaufbahnen am Außenumfang, einen zwischen dem Gelenkaußenteil und dem Gelenkinnenteil angeordneten Käfig mit einer Vielzahl von Fenstern, und Kugeln, die jeweils in einem Fenster des Käfigs angeordnet sind und mit den Kugellaufbahnen des Gelenkaußenteils und des Gelenkinnenteils zur Drehmomentübertragung in Eingriff stehen. Es zeichnet sich dadurch aus, dass der maximale Betriebsbeugewinkel des Gelenks größer als 40 Grad ist und die durchschnittliche Länge b der Käfigfenster in Umfangsrichtung des Käfigs im Verhältnis zur Breite i der Käfigfenster kleiner als 1,23 ist.

In Weiterbildung der Erfindung ist gemäß Patentanspruch 2 vorgesehen, dass an dem Gelenkaußenteil und/oder dem Gelenkinnenteil an die Kugellaufbahnen anschließende Ausweichmöglichkeiten für die Kugeln ausgebildet sind, welche sich außerhalb des Aufenthaltsorts der Kugeln, den diese innerhalb des maximalen Betriebsbeugewinkels erreichen können, jedoch innerhalb des Aufenthaltsorts der Kugeln, den diese bei einem Überbeugen des Gelenks in eine Stellung zur Kugelmontage maximal erreichen können, befinden, um bei einem Überbeugen des Gelenks in eine Stellung zur Kugelmontage ein Ausweichen betreffender Kugeln in Radialrichtung und/oder in Umfangsrichtung gegenüber einer gedachten Verlängerung der Kugellaufbahnen zu ermöglichen.

Die Ausweichmöglichkeiten schließen somit an den Betriebsbeugewinkelbereich der Kugellaufbahnen an, wobei der Übergang möglichst weich ausgeführt wird. Hierdurch können in Umfangsrichtung kürzere Fenster und damit stärkere Stege zwischen den Fenstern realisiert werden. Insbesondere wird die Länge der Fenster nicht mehr durch den für die Montage der Kugeln erforderlichen Beugewinkel bestimmt, sondern kann bedingt durch die für die Kugeln vorgesehene Ausweichmöglichkeit etwas kleiner gewählt werden. Im Vergleich zu herkömmlichen Gelenken ergibt sich somit für gleiche maximale Betriebsbeugewinkel eine kürzere Länge der Fenster in Umfangsrichtung und somit eine größere Länge der Stege zwischen diesen Fenstern. Hierdurch wird die Bruchfestigkeit des Käfigs und des Gelenks erhöht.

In Bezug auf Gleichlauffestgelenke der eingangs genannten Art lässt sich dies , wie in Patentanspruch 1 beansprucht, dadurch ausdrücken, dass bei großen maximalen Betriebsbeugewinkeln die durchschnittliche Länge der Käfigfenster in Umfangsrichtung des Käfigs im Verhältnis zur Breite der Käfigfenster kleiner als 1,23 ist. Herkömmliche Gelenke benötigen bei maximalen Betriebsbeugewinkeln von mehr als 40° längere Käfigfenster und weisen dementsprechend schwächere Stege auf.

Die Fensterlängen orientieren sich bei der erfindungsgemäßen Ausführung an den Längen, die bei maximalem Betriebsbeugewinkel des Gelenkes benötigt werden. Dieser maximale Betriebsbeugewinkel liegt je nach Gelenkbauart üblicherweise zwischen 40° und 52°.

Ein gemäß der Erfindung ausgeführtes Gelenkaußenteil bzw. Gelenkinnenteil ermöglicht trotz der kleinen Fenster ein Abbeugen zu Beugewinkeln, die eine Kugelmontage ermöglichen. Zur Montage werden je nach Ausführung Beugewinkel zwischen 60° und 75° benötigt.

Durch die Verstärkung der Stege des Käfigs kann die Bruchfestigkeit eines Gleichlauffestgelenks erheblich gesteigert werden. Gelenke mit einer durch die Anwendung geforderten Bruchlast können in einem kleineren Bauraum und mit reduziertem Gewicht ausgeführt werden.

Herkömmliche Gelenke weisen zur einfacheren Herstellung der Laufbahnen an deren Enden Freistiche auf. Diese Freistiche befinden sich jedoch regelmäßig außerhalb des Bereichs, den die Kugeln bei in die Kugelmontageposition überbeugtem Gelenk erreichen können. Bei herkömmlichen Gelenken bleiben somit auch die bereits montierten, maximal verschwenkten Kugeln in Abschnitten der üblicherweise über den Betriebsbeugewinkelbereich hinaus ausgeführten Kugellaufbahnen gefangen und können weder radial noch in Umfangsrichtung ausweichen.

Vorteilhafte Ausgestaltungen der Erfindung sind in weiteren Patentansprüchen angegeben.

In einer ersten Ausführung zeichnet sich das Gelenkaußenteil durch eine Kugellaufbahnlänge aus, die in Richtung der von der Gelenköffnung abgewandten Seite nur geringfügig über den bei maximalem Betriebsbeugewinkel überstrichenen Bereich hinausgeht. Am Laufbahnende schließt sich als Ausweichmöglichkeit eine Materialrücknahme an, die es der jeweiligen Kugel erlaubt, gegenüber einer gedachten Verlängerung der Kugellaufbahn sowohl radial nach außen als auch in Umfangsrichtung auszuweichen.

Gemäß einer vorteilhaften Ausgestaltung sind die Materialrücknahmen des Gelenkaußenteils als Ausnehmungen, insbesondere als Kalotten ausgebildet.

Der Steg zwischen den Käfigfenstern kann entsprechend dem Ausweichen der Kugel in Umfangsrichtung stärker ausgeführt werden, da die aus der Laufbahn ausgetretenen Kugeln sich innerhalb der Materialrücknahme vom Steg des Kugelkäfigs weg bewegen können. Die Käfigfenster werden bei stärkeren Stegen entsprechend kürzer.

In einer zweiten Ausführung kann das Gelenkinnenteil so ausgeführt sein, dass die Kugellaufbahnlänge nur geringfügig über den bei maximalem Betriebsbeugewinkel überstrichenen Bereich hinausgeht. Gemeint ist hier die Laufbahnlänge, die bei gestrecktem Gelenk in Richtung der Gelenköffnung verläuft. Am Laufbahnende schließt sich eine Materialrücknahme an, die es der jeweiligen Kugel erlaubt, gegenüber einer gedachten Verlängerung der Laufbahn sowohl radial nach innen als auch in Umfangsrichtung auszuweichen. Die Auswirkung auf Steg und Fensterlänge des Käfigs ist analog der Maßnahme am Gelenkaußenteil.

Ferner können die beiden beschriebenen Ausführungen auch in Kombination eingesetzt werden.

Gemäß einer weiteren vorteilhaften Ausgestaltung der Erfindung sind die Ausweichmöglichkeiten derart bemessen, dass bei in die Montageposition der Kugeln überbeugtem Gelenk mindestens zwei in Umfangsrichtung benachbarte Kugeln gegenüber der gedachten Laufbahnverlängerung ausgelenkt sind. Dies ermöglicht ein gegenüber dem Stand der Technik modifiziertes Montagekonzept für die Kugeln.

Herkömmlicherweise wird ein Gleichlauffestgelenk bei der Kugelmontage in einer Stellung gebeugt, in der die Endposition der einzusetzenden Kugel am weitesten herausgeschwenkt ist. Die benachbarten Kugeln, soweit schon montiert, befinden sich dann noch in den Laufbahnen, so dass die zu montierende Kugel in die von den Bauteilachsen bzw. Kugelmittelpunkten aufgespannte Beugeebene des Gelenks eingesetzt wird.

Das durch die Erfindung ermöglichte modifizierte Montagekonzept sieht hingegen vor, dass die Montage in einer um einen halben Laufbahnabstand verdrehten Position erfolgt. In dieser Stellung ist ein Steg des Kugelkäfigs, und nicht etwa ein Fenster, am weitesten herausgeschwenkt. Die zu diesem Steg benachbarten Käfigfenster sind dabei beide für das Einlegen jeweils einer Kugel zugänglich. Die beiden gegenüberliegenden Kugeln im Inneren des Gelenks - soweit bereits montiert und bei gerader Kugelanzahl - sind in dieser Stellung aus der Laufbahn ausgetreten, was durch die oben beschrieben Ausweichmöglichkeiten ermöglicht wird. Ihre Mittelpunkte liegen dabei etwas außerhalb der gedachten Laufbahnverlängerung. Der Montagewinkel ist bei dieser modifizierten Methode tendenziell größer, als bei dem Vorgehen nach dem Stand der Technik.

Vorteilhaft ist bei der erfindungsgemäßen Methode ferner, dass in einer Montageposition zwei Kugeln gleichzeitig eingesetzt werden können, wodurch die Montagezeit verkürzt wird.

Gemäß einer weiteren vorteilhaften Ausgestaltung der Erfindung weist das Gelenk eine Längsöffnung auf. Die Ausweichmöglichkeiten bzw. Ausnehmungen am Gelenkaußenteil schließen dann vorzugsweise an der der Gelenköffnung gegenüberliegenden Seite an die Kugellaufbahnen des Gelenkaußenteils an. Am Gelenkinnenteil schließen die Ausweichmöglichkeiten, die in Form von Materialrücknahmen ausgebildet sind, vorzugsweise an der Seite der Gelenköffnung an die Kugellaufbahnen des Gelenkinnenteils an.

Weiterhin können alle Käfigfenster gleich ausgeführt werden und gleichmäßig über den Umfang verteilt sein. Dies führt im Vergleich zu einem Gelenk nach der der DE 42 34 488 C1 zu einem geringeren Fertigungs- und Montageaufwand.

Vorzugsweise ist der Käfig bei der Montage zwischen das Gelenkaußenteil und das Gelenkinnenteil einschwenkbar. Hierbei werden beide Bauteile zunächst in einer Stellung mit gekreuzten Bauteilachsen zusammengeführt und hernach in eine koaxiale Stellung geschwenkt. Das Gelenkaußenteil kann somit an seinem Innenumfang eine Käfigführungsfläche mit Hinterschnitt aufweisen. Hierdurch ist eine besonders vorteilhafte einteilige Ausführung des Gelenkaußenteils möglich, das zudem gegebenenfalls auch noch einen Achszapfen ausbilden kann. Ferner ist auch eine koaxiale Montage des Käfigs möglich, wobei der Hinterschnitt des Gelenkaußenteils dadurch überwunden wird, dass der Käfig zunächst soweit um die gemeinsame Achse verdreht wird, dass die Fenster zu den Stegen zwischen den Kugellaufbahnen ausgerichtet sind. Nach dem axialen Zusammenführen wird der Käfig dann in eine Stellung zurückgedreht, in der die Fenster wieder zu den Kugellaufbahnen zeigen.

Die Anzahl der Kugeln liegt bevorzugt im Bereich zwischen sechs und neun. Vorzugsweise sind sechs Kugeln vorgesehen, wobei dann auch der Käfig sechs Fenster aufweist.

Gemäß einer weiteren, vorteilhaften Ausgestaltung liegt der maximale Betriebsbeugewinkel bei mindestens 47°.

In einer weiteren, vorteilhaften Ausgestaltung ist bei einem maximalen Betriebsbeugewinkel des Gelenks von größer als 40 Grad die durchschnittliche Länge der Käfigfenster in Umfangsrichtung des Käfigs im Verhältnis zur Breite der Käfigfenster kleiner als 1,21.

Zur Gewährleistung einer hohen Tragfähigkeit der Kugeln sind an dem Gelenkinnenteil folgende Bedingungen eingehalten:

für PCD kleiner oder gleich 62 mm:    $\varepsilon/\gamma$ größer 1,6

und

für PCD größer 62 mm:   ε/γ größer 1,8

wobei

PCD   der Teilkreisdurchmesser durch die Kugelmittelpunkte ist,

ε   der die Kugellaufbahn einschließende Winkel (Laufbahnwinkel) zwischen den Schnittpunkten des Kugeldurchmessers mit einem gedachten Innenteil-Außendurchmesser bezogen auf den Gelenkachsenschnittpunkt einer durch die Mittelpunkte der Kugeln aufgespannten Ebene ist, und

γ   der den Steg zwischen benachbarten Kugellaufbahnen einschließende Winkel (Stegwinkel) zwischen den Schnittpunkten des Kugeldurchmessers mit dem gedachten Innenteil-Außendurchmesser bezogen auf den Gelenkachsenschnittpunkt der durch die Mittelpunkte der Kugeln aufgespannten Ebene ist.

Nachfolgend wird die Erfindung anhand eines in der Zeichnung dargestellten Ausführungsbeispiels näher erläutert. Die Zeichnung zeigt in:

Figur 1   eine Längsschnittansicht eines Ausführungsbeispiels eines Gleichlauffestgelenks nach der Erfindung,

Figur 2   eine Ansicht auf die Öffnungs- bzw. Montageseite des Gelenkaußenteils,

Figur 3   eine Ansicht auf die Öffnungsseite des Gelenks mit teilweise freigeschnittenem Käfig,

Figur 4   eine Längsschnittansicht des Käfigs, und in

Figur 5   eine Querschnittsansicht des Gelenkinnenteils.

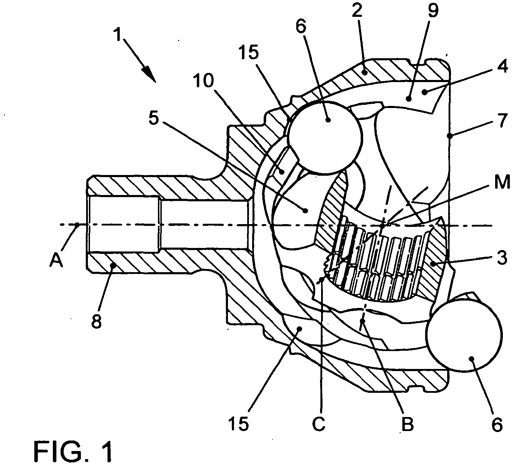

Das in Figur 1 dargestellte Gleichlauffestgelenk 1 umfasst ein Gelenkaußenteil 2 und ein Gelenkinnenteil 3. Sowohl das Gelenkaußenteil 2 als auch das Gelenkinnenteil 3 sind an ihren zueinander weisenden kugelförmigen Umfangsflächen mit Kugellaufbahnen 4 bzw. 5 versehen, die jeweils paarweise eine drehmomentübertragende Kugel 6 aufnehmen. Dabei kann das Gelenkinnenteil 3, das hier beispielhaft eine zentrale Aufnahme mit einer Kerbverzahnung für eine Welle aufweist, gegenüber dem Gelenkaußenteil 2 um ein Beugezentrum M des Gelenks verschwenkt werden. Der Querschnitt der Kugellaufbahnen 4 bzw. 5 ist vorzugsweise der Kontur der Kugeln 6 angepasst. Es ist jedoch auch möglich, zumindest eine der Laufbahnen so auszugestalten, dass die zugehörige Kugel 6 über zwei Kontaktstellen gegen die jeweilige Laufbahn 4 bzw. 5 abgestützt ist. Dies trifft beispielsweise auf elliptische oder gotische Laufbahnen zu.

Das Gelenkaußenteil 2 nach dem Ausführungsbeispiel besitzt eine glockenartige, das Gelenkinnenteil 3 umschließende Form. Die offene Seite der Glocke bildet eine Gelenköffnung 7, von welcher her das Gelenkinnenteil 3 in das Gelenkaußenteil 2 eingesetzt ist. An der gegenüberliegenden Seite der Gelenköffnung 7 ist an das Gelenkaußenteil 2 ein Achszapfen 8 angeformt.

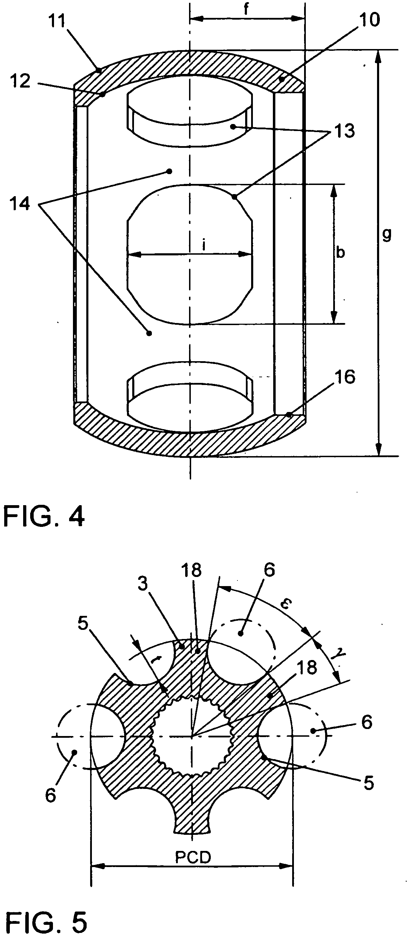

Zwischen dem Gelenkaußenteil 2 und dem Gelenkinnenteil 3 ist ein dünnwandiger Käfig 10 angeordnet, der in Figur 4 näher dargestellt ist. Der außen und innen kugelförmig ausgebildete Käfig 10 umgibt das Gelenkinnenteil 3 und ist an einer hinterschnittenen, kugeligen Käfigführungsfläche 9 des Gelenkaußenteil 2 in der Art eines Kugelgelenks gelagert. Dabei sind die Außenumfangsfläche 11 und die Innenumfangsfläche 12 des Käfigs 10 zueinander konzentrisch. Das Verhältnis von Käfigaußendurchmesser zu Käfiginnendurchmesser beträgt vorzugsweise weniger als 1,15, d. h. der Käfig 10 ist mit verhältnismäßig geringer Wanddicke ausgeführt.

Der Käfig 10 weist weiterhin Fenster 13 zur Aufnahme und Führung der Kugeln 6 auf. Diese werden in einer gemeinsamen Ebene E gehalten, die bei einer Beugung des Gelenks 1 um den Beugewinkel zwischen den Achsen des Gelenkaußenteils 2 und des Gelenkinnenteils 3 um den halben Winkel angestellt ist.

Wie Figur 4 zeigt, ist der Käfig 10 als einfacher Ringkörper mit kugelförmigen Außen- und Innenumfangsflächen 11 und 12 ausgebildet. Dabei besitzen alle Fenster 13 in Umfangsrichtung die gleiche Länge b sowie die gleiche Breite i. Letztere entspricht in etwa dem Durchmesser der Kugeln 6. Bei dem dargestellten Ausführungsbeispiel sind zudem die Fenster 13 am Umfang gleichverteilt angeordnet und weisen alle die gleiche Form auf. Dies ermöglicht eine sehr einfache und kostengünstige Herstellung. Durch das Fehlen weiterer Nuten und Aussparungen an dem Käfig 10 werden zusätzlicher Bearbeitungsaufwand und eine Schwächung des Käfigs 10 vermieden, so dass dieser verhältnismäßig dünn ausgeführt werden kann. Hierzu trägt weiter bei, dass der Radius der Ausrundung der Käfigfenster 13 im Verhältnis zu der axialen Breite i der Käfigfenster 13 verhältnismäßig groß gewählt wird. Dies verbessert die Belastbarkeit der Käfigstege 14 zwischen den Fenstern 13, da die Kerbwirkung reduziert ist.

Erfindungsgemäß weist das dargestellte Gelenk einen maximalen Betriebsbeugewinkel von mehr als 40 Grad auf. Dabei ist die durchschnittliche Länge b der Käfigfenster 13 in Umfangsrichtung des Käfigs 10 im Verhältnis zur Breite i der Käfigfenster 13 kleiner als 1,23. In einer besonders optimierten Form gilt b/i < 1,21. Die in Umfangsrichtung kurzen Fenster 13 ermöglichen besonders stabile Stege 14 und damit eine beträchtliche Erhöhung der Bruchfestigkeit des Gelenks. Mit derartigen Fensterlängen lässt sich eine herkömmliche Montage der Kugeln 6 durch Überbeugen des Gelenks nicht mehr bewerkstelligen.

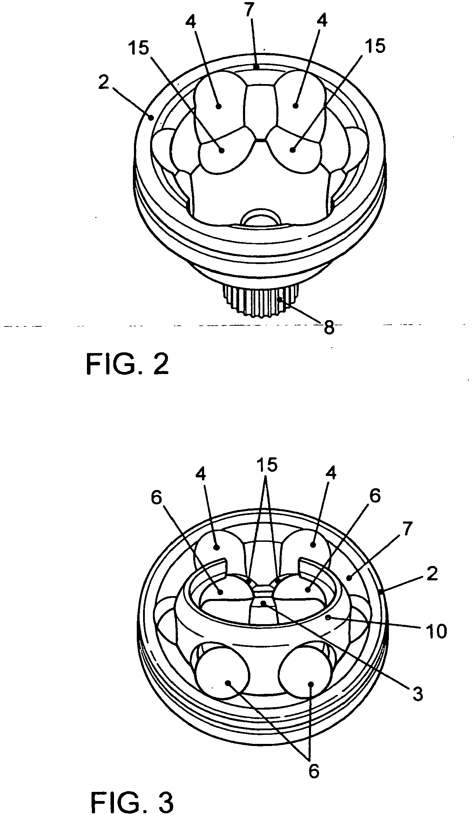

Daher schließen an die Kugellaufbahnen 4 des Gelenkaußenteils 2 Ausweichmöglichkeiten an, die es den Kugeln 6 gestatten, sich von einem Aufenthaltsort, welcher einer gedachten Verlängerung der jeweiligen Kugellaufbahn 4 entspricht, radial und/oder in Umfangsrichtung zu entfernen. Beispielhaft sind vorliegend Ausnehmungen 15 dargestellt, welche gegenüber den Kugellaufbahnen 4 des Gelenkaußenteils 2 sowohl radial als auch in Umfangsrichtung erweitert sind, um bei einem Überbeugen des Gelenks 1 in eine Stellung zur Kugelmontage ein Ausweichen der betreffenden Kugeln 6 gegenüber einer gedachten Verlängerung der Kugellaufbahnen 4 radial nach außen und in Umfangsrichtung zu ermöglichen. Bei dem dargestellten Ausführungsbeispiel sind die Ausnehmungen 15 in Form von in Figur 2 gut erkennbaren Kalotten ausgeführt. Diese befinden sich jeweils an den der Gelenköffnung 7 gegenüberliegenden Enden der Kugellaufbahnen 4. Letztere sind so bemessen, dass diese nicht wesentlich über die Position der jeweiligen Kugel 6 bei maximalem Betriebsbeugewinkel hinausgehen. Wird der maximale Betriebsbeugewinkel zum Zweck der Montage der Kugeln 6 überschritten, können bereits montierte Kugeln 6 in die jeweiligen Ausnehmungen 15 gelangen und dabei in ihrer Position gegenüber einer gedachten Verlängerung der Kugellaufbahn 4 abweichen. Die hierdurch geschaffene Ausweichmöglichkeit für die Kugeln 6 gestattet es, die Länge der Käfigfenster 13 in Umfangsrichtung stark zu verkürzen.

Die Ausnehmungen 15 des Ausführungsbeispiels sind derart bemessen, dass bei einem Überbeugen des Gelenks in die Montageposition der Kugeln 6 mindestens zwei in Umfangsrichtung benachbarte Kugeln 6 gegenüber der gedachten Laufbahnverlängerung ausgelenkt sind, wie dies in Figur 3 zu erkennen ist.

In Abwandlung des dargestellten Ausführungsbeispiels ist es auch möglich, an dem Gelenkinnenteil 3 eine Ausweichmöglichkeit für die Kugeln 6 bei überbeugtem Gelenk zu schaffen. In diesem Fall können an die Kugellaufbahnen 5 des Gelenkinnenteils 3 Ausnehmungen in Form von Materialrücknahmen anschließen, welche gegenüber den Kugellaufbahnen 3 des Gelenkinnenteils 5 sowohl radial als auch in Umfangsrichtung erweitert sind. Ferner ist es möglich, entsprechende Ausweichmöglichkeiten sowohl am Gelenkaußenteil 2 als auch am Gelenkinnenteil 3 vorzusehen, wodurch sich besonders kurze Käfigfenster 13 mit b/i < 1,21 realisieren lassen.

Neben der Gestaltung des Käfigs 10 spielt auch der Verlauf der Kugellaufbahnen 4 und 5 eine wichtige Rolle für die Bruchfestigkeit des Gelenks 1. Bahnverläufe, wie sie in der DE 10 2005 029 042 A1 und der DE 102 60 172 A1 beschrieben werden, ermöglichen einen verhältnismäßig dünnen Käfig 10, der bei Gelenkumdrehungen unter großem Beugewinkel eine ausreichende Führung über den gesamten, dabei auftretenden Radialversatz der Kugeln 6 gewährleistet. An den Laufbahnenden wird so eine gute Umschlingung der Kugeln 6 gewährleistet, die sich vorteilhaft auf die Tragfähigkeit der Kugellaufbahnen und die Bruchfestigkeit auswirkt. Praktisch drückt sich dies durch einen hohen Überlappungsgrad zwischen den Endbereichen der Laufbahnen und den Kugeln aus.

Zur weiteren Verbesserung der Bruchfestigkeit bei großen Beugewinkeln haben sich an einem Gleichlauffestgelenk 1 der vorstehend erläuterten Art die folgenden Maßnahmen als vorteilhaft erwiesen, durch die ein Einschwenken des Gelenkinnenteils 3 in den Käfig 10 bei der Montage möglich ist und dennoch die Funktionsflächen, d. h. insbesondere die Kugellaufbahnen 4 und 5 im Hinblick auf ihre Tragfähigkeit optimal gestaltet bleiben.

Bei diesem Montageregime ist es zur Gewährleistung einer hohen Bruchfestigkeit ohne Beeinträchtigung der Funktionsflächen von Vorteil, wenn bei ungebeugtem Gelenk in der die Kugelmitten schneidenden Ebene E die folgende Bedingung an dem Gelenkinnenteil 3 eingehalten wird.

$$\text{Bei PCD kleiner oder gleich 62 mm:} \quad \varepsilon/\gamma > 1{,}6$$

und

$$\text{bei PCD größer 62 mm:} \quad \varepsilon/\gamma > 1{,}8$$

Hierbei ist $\varepsilon$ der die Laufbahn 5 einschließende Winkel (Laufbahnwinkel) zwischen den Schnittpunkten des Kugeldurchmessers mit dem gedachten Außendurchmesser des Innenteils bezogen auf den Gelenkachsenschnittpunkt M der Ebene E durch die Kugelmitten. Dagegen ist $\gamma$ der den Steg 18 einschließende Winkel (Stegwinkel) zwischen den Schnittpunkten des Kugeldurchmessers mit dem gedachten Innenteil-Außendurchmesser bezogen auf den Gelenkachsenschnittpunkt M der genannten Ebene E durch die Kugelmitten.

Alternativ oder ergänzend ist zudem folgende Bedingung eingehalten:

$$\text{bei PCD kleiner oder gleich 62 mm:} \quad t/d > 0{,}16$$

und

$$\text{bei PCD größer 62 mm:} \quad t/d > 0{,}168$$

Hierbei ist t die Tiefe der Laufbahn 5 und d der Außendurchmesser des Gelenkinnenteils 3. Auf diese Weise fassen sich alle Stege 18 gleich gestalten. Zudem weisen alle eine ausreichende Funktionsfläche am Außenumfang des Gelenkinnenteils 3 auf. Weiterhin wird die Belastbarkeit des Käfigs 10 verbessert, da die axiale Länge des Käfigs 10 an der Montageseite 16 vergrößert werden kann.

Der axiale Abstand f der Mitte der Käfigfenster 13 vom Käfigrand der Montageseite 16 in Relation zum Außendurchmesser g des Käfigs 10 kann nach folgender Beziehung

$$f/g > 0,275$$

gewählt werden.

Bei der Montage werden zunächst das Gelenkaußenteil 2, das Gelenkinnenteil 3 und der Käfig 10 zusammengebaut, bevor anschließend die Kugeln 6 eingesetzt werden. Hierzu wird das Gelenkinnenteil 3 mit seiner Achse B gegenüber der Achse C des Käfigs 10 um 90 Grad angewinkelt. Bei dem nachfolgenden Einführvorgang greift einer der Stege 18 des Gelenkinnenteils 3, der in Umfangsrichtung durch zwei Kugellaufbahnen 5 begrenzt wird, in ein Fenster 13 des Käfigs 10 ein. Hierdurch wird soviel Spiel erhalten, dass der gegenüberliegende Steg 18 den durch die Kugelform des Innenumfangs des Käfigs 10 gebildeten Hinterschnitt überwindet. Der Käfig 10 kann hierzu an seiner Einführseite 16 gegebenenfalls einen größeren

Öffnungsdurchmesser als an seiner gegenüberliegenden Seite aufweisen. Anschließend können die beiden Bauteile zueinander ausgerichtet werden, indem die Mittelpunkte der Kugelflächen am Gelenkinnenteil 3 und am Käfig 10 überlagert werden. Sodann lassen sich beide in eine achsparallele Stellung zueinander schwenken. Die Montage zwischen Käfig 10 und Gelenkaußenteil 2 erfolgt analog durch Einschwenken.

Zur anschließenden Montage der Kugeln 6 wird das Gelenk 1 über den maximalen Betriebsbeugewinkel hinaus überbeugt, und zwar derart, dass ein Steg 14 des Käfigs 10, und nicht etwa ein Fenster 13, am weitesten aus der Gelenköffnung 7 hervorsteht. Die beiden gegenüberliegenden, am weitesten innenliegenden Kugeln 6, sofern bereits montiert, weichen hierbei in die Ausnehmungen 15 aus, welche die mangelnde Ausweichmöglichkeit in den zugehörigen Käfigfenstern 13 kompensieren.

Die zu dem maximal herausgeschwenkten Käfigsteg 14 benachbarten Käfigfenster 13 sind in dieser Stellung beide für das Einlegen jeweils einer Kugel 6 zugänglich. Es ist somit möglich, in einer Montageposition zwei Kugeln 6 am Gelenk 1 zu montieren. Gegenüber herkömmlichen Montageverfahren gestattet dies eine erhebliche Reduzierung der Montagezeit.

Das vorstehend erläuterte Gleichlauffestgelenk 1 zeichnet sich durch eine hohe Bruchfestigkeit bei großen Beugewinkeln aus, da die Bruchfestigkeit des Käfigs 10 erheblich gesteigert wird.

Zudem wird der Montageaufwand vermindert.

Mit der dargestellten Gelenkausführung sind Beugewinkel größer 50° erreichbar.

Zudem ist bei der Montage ein einfaches Einschwenken des Gelenkinnenteils in den Käfig möglich. Aufgrund seiner einfachen Form ist dieser zudem günstig herstellbar. Überdies kann der Käfig mit geringer Dicke ausgeführt werden.

Das Gleichlauffestgelenk zeichnet sich überdies durch eine besonders kompakte Bauweise aus.

Die Erfindung wurde vorstehend anhand eines Ausführungsbeispiels näher erläutert. Sie ist jedoch nicht auf dieses Ausführungsbeispiel beschränkt, sondern umfasst alle durch die Patentansprüche definierten Ausgestaltungen.

**Bezugszeichenliste**

| | |
|---|---|
| 1 | Gleichlauffestgelenk |
| 2 | Gelenkaußenteil |
| 3 | Gelenkinnenteil |
| 4 | Kugellaufbahn des Gelenkaußenteils |
| 5 | Kugellaufbahn des Gelenkinnenteils |
| 6 | Kugel |
| 7 | Gelenköffnung |
| 8 | Achszapfen |
| 9 | Käfigführungsfläche |
| 10 | Käfig |
| 11 | Außenumfangsfläche des Käfigs |
| 12 | Innenumfangsfläche des Käfigs |
| 13 | Fenster |
| 14 | Steg am Käfig |
| 15 | Ausnehmung |
| 16 | Einführseite |
| 18 | Steg am Gelenkinnenteil |
| b | Länge des Käfigfensters in Umfangsrichtung |
| f | Abstand Käfigfenstermitte - Rand der Einführöffnung am Käfig |
| g | Außendurchmesser des Käfigs |
| i | Breite (axiale Länge) des Käfigfensters |
| t | Tiefe der Laufbahnen am Gelenkinnenteil |
| A | Achse des Gelenkaußenteils |
| B | Achse des Gelenkinnenteils |
| C | Achse des Käfigs |
| PCD | Teilkreisdurchmesser der Kugelmittelpunkte bei ungebeugtem Gelenk |
| γ | Stegwinkel am Außendurchmesser des Gelenkinnenteils geschnitten durch die Kugelmitten im rechten Winkel zur Achse B bei ungebeugtem Gelenk, wobei der Winkel auf die Schnittpunkte zwischen dem theoretischen Kugeldurchmesser und dem theoretischen Außendurchmesser des Gelenkinnenteils bezogen ist |
| ε | Laufbahnwinkel am Außendurchmesser des Gelenkinnenteils geschnitten durch die Kugelmitten im rechten Winkel zur Achse B bei ungebeugtem Gelenk, wobei der Winkel auf die Schnittpunkte zwischen dem theoretischen Kugeldurchmesser und dem theoretischen Außendurchmesser des Gelenkinnenteils bezogen ist |

**Patentansprüche**

1. Gleichlauffestgelenk, umfassend:

   - ein Gelenkaußenteil (2) mit einer Vielzahl von Kugellaufbahnen (4) am Innenumfang,
   - ein Gelenkinnenteil (3) mit einer Vielzahl von Kugellaufbahnen (5) am Außenumfang,
   - einen zwischen dem Gelenkaußenteil (2) und dem Gelenkinnenteil (3) angeordneten Käfig (10) mit einer Vielzahl von Fenstern (13), und
   - Kugeln (6), die jeweils in einem Fenster (13) des Käfigs (10) angeordnet und sind und mit den Kugellaufbahnen (4, 5) des Gelenkaußenteils (2) und des Gelenkinnenteils (3) zur Drehmomentübertragung in Eingriff stehen,

   **dadurch gekennzeichnet, dass**
   der maximale Betriebsbeugewinkel des Gelenks größer als 40 Grad ist und die durchschnittliche Länge b der Käfigfenster (13) in Umfangsrichtung des Käfigs (10) im Verhältnis zur Breite i der Käfigfenster (13) kleiner als 1,23 ist.

2. Gleichlauffestgelenk nach Anspruch 1, **dadurch gekennzeichnet, dass** an dem Gelenkaußenteil (2) und/oder dem Gelenkinnenteil (3) an die Kugellaufbahnen (4, 5) anschließende Ausweichmöglichkeiten für die Kugeln (6) ausgebildet sind, welche sich außerhalb des Aufenthaltsorts der Kugeln (6), den diese innerhalb des maximalen Betriebsbeugewinkels erreichen können, jedoch innerhalb des Aufenthaltsorts der Kugeln (6), den diese bei einem Überbeugen des Gelenks in eine Stellung zur Kugelmontage maximal erreichen können, befinden, um bei einem Überbeugen des Gelenks in eine Stellung zur Kugelmontage ein Ausweichen betreffender Kugeln (6) in Radialrichtung und/oder in Umfangsrichtung gegenüber einer gedachten Verlängerung der Kugellaufbahnen (4, 5) zu ermöglichen.

3. Gleichlauffestgelenk nach Anspruch 2, **dadurch gekennzeichnet, dass** die Ausweichmöglichkeiten des Gelenkaußenteils (2) durch an die Kugellaufbahnen (4) des Gelenkaußenteils (2) anschließende Ausnehmungen (15) gebildet sind, welche gegenüber den Kugellaufbahnen (4) des Gelenkaußenteils (2) sowohl radial als auch in Umfangsrichtung erweitert sind, um bei einem Überbeugen des Gelenks in eine Stellung zur Kugelmoritage ein Ausweichen der betreffenden Kugeln (6) gegenüber einer gedachten Verlängerung der Kugellaufbahnen (4) radial nach außen und in Umfangsrichtung zu ermöglichen.

4. Gleichlauffestgelenk nach Anspruch 3, **dadurch gekennzeichnet, dass** die Ausnehmungen (15) des Gelenkaußenteils (2) als Kalotten ausgebildet sind.

5. Gleichlauffestgelenk nach Anspruch 2, **dadurch gekennzeichnet, dass** die Ausweichmöglichkeiten des Gelenkinnenteils (3) durch an die Kugellaufbahnen (5) des Gelenkinnenteils (3) anschließende Ausnehmungen gebildet sind, welche gegenüber den Kugellaufbahnen (5) des Gelenkinnenteils (3) sowohl radial als auch in Umfangsrichtung erweitert sind, um bei einem Überbeugen des Gelenks in eine Stellung zur Kugelmontage ein Ausweichen der betreffenden Kugeln (6) gegenüber einer gedachten Verlängerung der Kugellaufbahnen (5) radial nach innen und in Umfangsrichtung zu ermöglichen.

6. Gleichlauffestgelenk nach einem der Ansprüche 2 bis 5, **dadurch gekennzeichnet, dass** die Ausweichmöglichkeiten bzw. Ausnehmungen (15) derart bemessen sind, dass bei in die Montageposition der Kugeln (6) überbeugtem Gelenk mindestens zwei in Umfangsrichtung benachbarte Kugeln (6) gegenüber der gedachten Laufbahnverlängerung ausgelenkt sind.

7. Gleichlauffestgelenk nach einem der Ansprüche 2 bis 6, **dadurch gekennzeichnet, dass** das Gelenk eine Gelenköffnung (7) aufweist und die Ausweichmöglichkeiten bzw. Ausnehmungen (15) am Gelenkaußenteil (2) an der der Gelenköffnung (7) gegenüberliegenden Seite an die Kugellaufbahnen (4) des Gelenkaußenteils (2) anschließen.

8. Gleichlauffestgelenk nach einem der Ansprüche 2 bis 7, **dadurch gekennzeichnet, dass** das Gelenk eine Gelenköffnung (7) aufweist und die Ausweichmöglichkeiten bzw. Ausnehmungen am Gelenkinnenteil (3) in Form von Materialrücknahmen an der Seite der Gelenköffnung (7) an die Kugellaufbahnen (5) des Gelenkinnenteils (3) anschließen.

9. Gleichlauffestgelenk nach einem der Ansprüche 1 bis 8, **dadurch gekennzeichnet, dass** das Gelenkaußenteil (2) an seinem Innenumfang eine Käfigführungsfläche (9) mit Hinterschnitt aufweist.

10. Gleichlauffestgelenk nach einem der Ansprüche 1 bis 9, **dadurch gekennzeichnet, dass** der maximale Betriebsbeugewinkel größer als 47° ist.

11. Gleichlauffestgelenk nach einem der Ansprüche 1 bis 10, **dadurch gekennzeichnet, dass** der maximale Betriebsbeugewinkel des Gelenks größer als 40 Grad ist und die durchschnittliche Länge b der Käfigfenster (13) in Umfangsrichtung des Käfigs (10) im Verhältnis zur Breite i der Käfigfenster (13) kleiner als 1,21 ist.

12. Gleichlauffestgelenk nach einem der Ansprüche 1 bis 11, **dadurch gekennzeichnet, dass** alle Fenster (13) die gleiche Fensterlänge aufweisen und in Umfangsrichtung gleichbeabstandet zueinander angeordnet sind.

13. Gleichlauffestgelenk nach einem der Ansprüche 1 bis 12, **dadurch gekennzeichnet, dass** die Kugellaufbahnen (5) des Gelenkinnenteils (3) in Umfangsrichtung durch Stege (18) getrennt sind und bei ungebeugtem Gelenk (1) in einer durch die Mittelpunkte der Kugeln (6) aufgespannten Ebene (E) folgende Bedingung an dem Gelenkinnenteil (3) eingehalten ist:

für PCD kleiner oder gleich 62 mm: $\varepsilon/\gamma$ größer 1,6

und

für PCD größer 62 mm: $\varepsilon/\gamma$ größer 1,8

wobei

PCD der Teilkreisdurchmesser durch die Kugelmittelpunkte ist,

$\varepsilon$ der die Kugellaufbahn (5) einschließende Winkel (Laufbahnwinkel) zwischen den Schnittpunkten des Kugeldurchmessers mit einem gedachten Innenteil-Außendurchmesser bezogen auf den Gelenkachsenschnittpunkt der genannten Ebene (E) ist, und

$\gamma$ der den Steg (18) einschließende Winkel (Stegwinkel) zwischen den Schnittpunkten des Kugeldurchmessers mit dem gedachten Innenteil-Außendurchmesser bezogen auf den Gelenkachsenschnittpunkt der genannten Ebene (E) ist.

14. Verfahren zur Montage eines Gleichlauffestgelenks nach einem der Ansprüche 1-13, bei dem nach erfolgtem Zusammenbau eines Gelenkaußenteils (2), eines Gelenkinnenteils (3) und eines Käfigs (10) Kugeln (6) bei über den maximalen Betriebsbeugewinkel hinaus überbeugtem Gelenk in an dem Käfig (10) ausgebildete Fenster (13) eingesetzt werden, **dadurch gekennzeichnet, dass** zur Montage der Kugeln (6) das Gelenk (1) über den maximalen Betriebsbeugewinkel hinaus derart überbeugt wird, dass ein zwischen zwei Fenstern (13) befindlicher Steg (14) des Käfigs (10) am weitesten aus einer Gelenköffnung (9) hervorsteht, und dass in die dem am weitesten hervorstehenden Steg (14) beidseits benachbarten Fenster (13) Kugeln (6) eingeführt werden.

## Claims

1. Constant velocity fixed joint, comprising:

- a joint outer part (2) having a multiplicity of ball raceways (4) on the inner circumference,
- a joint inner part (3) having a multiplicity of ball raceways (5) on the outer circumference,
- a cage (10) which is arranged between the joint outer part (2) and the joint inner part (3) having a multiplicity of windows (13), and
- balls (6) which are arranged in each case in a window (13) of the cage (10) and are in engagement with the ball raceways (4, 5) of the joint outer part (2) and of the joint inner part (3) for the transmission of torque,
**characterized in that**
the maximum operational articulation angle of the joint is greater than 40 degrees and the ratio of the mean length b of the cage windows (13) in the circumferential direction of the cage (10) to the width i of the cage windows (13) is smaller than 1.23.

2. Constant velocity fixed joint according to Claim 1, **characterized in that** escape options which adjoin the ball raceways (4, 5) are formed on the joint outer part (2) and/or the joint inner part (3) for the balls (6) which are located outside that location of the balls (6) which they can reach within the maximum operational articulation angle but within that location of the balls (6) which they can achieve at most during over-articulation of the joint into a position for ball mounting, in order, during over-articulation of the joint into a position for ball mounting, to make an escape of relevant balls (6) possible in the radial direction and/or in the circumferential direction with respect to an imaginary extension of the ball raceways (4, 5).

3. Constant velocity fixed joint according to Claim 2, **characterized in that** the escape options of the joint outer part (2) are formed by recesses (15) which adjoin the ball raceways (4) of the joint outer part (2) and are widened both radially and in the circumferential direction with respect to the ball raceways (4) of the joint outer part (2), in order, during over-articulation of the joint into a position for ball mounting, to make an escape of the relevant balls (6) possible radially to the outside and in the circumferential direction with respect to an imaginary extension of the ball raceways (4).

4. Constant velocity fixed joint according to Claim 3, **characterized in that** the recesses (15) of the joint outer part (2) are configured as cups.

5. Constant velocity fixed joint according to Claim 2, **characterized in that** the escape options of the joint inner part (3) are formed by recesses which adjoin the ball raceways (5) of the joint inner part (3) and are widened both radially and in the circumferential direction with respect to the ball raceways (5) of the joint inner part (3), in order, during over-articulation of the joint into a position for ball mounting, to make an escape of the relevant balls (6) possible radially to the inside and in the circumferential direction with respect to an imaginary extension of the ball raceways (4).

6. Constant velocity fixed joint according to one of Claims 2 to 5, **characterized in that** the escape options or recesses (15) are dimensioned in such a way that, in the case of a joint which is over-articulated into the mounting position of the balls (6), at least two balls (6) which are adjacent in the circumferential direction are deflected with respect to the imaginary raceway extension.

7. Constant velocity fixed joint according to one of Claims 2 to 6, **characterized in that** the joint has a joint opening (7) and the escape options or recesses (15) on the joint outer part (2) adjoin the ball raceways (4) of the joint outer part (2) on that side which lies opposite the joint opening (7).

8. Constant velocity fixed joint according to one of Claims 2 to 7, **characterized in that** the joint has a joint opening (7) and the escape options or recesses on the joint inner part (3) adjoin, in the form of material cut-outs, the ball raceways (5) of the joint inner part (3) on the side of the joint opening (7).

9. Constant velocity fixed joint according to one of Claims 1 to 8, **characterized in that** the joint outer part (2) has a cage guiding face (9) with an undercut on its inner circumference.

10. Constant velocity fixed joint according to one of Claims 1 to 9, **characterized in that** the maximum operational articulation angle is greater than 47°.

11. Constant velocity fixed joint according to one of Claims 1 to 10, **characterized in that** the maximum operational articulation angle of the joint is greater than 40'degrees and the ratio of the mean length b of the cage windows (13) in the circumferential direction of the cage (10) to the width i of the cage windows (13) is smaller than 1.21.

12. Constant velocity fixed joint according to one of Claims 1 to 11, **characterized in that** all the windows (13) have the same window length and are arranged at identical spacings from one another in the circumferential direction.

13. Constant velocity fixed joint according to one of Claims 1 to 12, **characterized in that** the ball raceways (5) of the joint inner part (3) are separated in the circumferential direction by webs (18), and, in the case of a non-articulated joint (1), the following condition is complied with on the joint inner part (3) in a plane (E) which is defined by the centre points of the balls (6):

for PCD of less than or equal to 62 mm: $\varepsilon/\gamma$ greater than 1.6
and
for PCD of greater than 62 mm: $\varepsilon/\gamma$ greater than 1.8,
wherein
PCD is the pitch circle diameter through the ball centre points,

$\varepsilon$ is the angle (raceway angle) which includes the ball raceway (5) between the points of intersection of the ball diameter with an imaginary inner-part outer diameter, in relation to the joint-axis point of intersection of the said plane (E), and
$\gamma$ is the angle (web angle) which includes the web (18) between the points of intersection of the ball diameter with the imaginary inner-part outer diameter, in relation to the joint-axis point of intersection of the said plane (E).

14. Method for assembling a constant velocity fixed joint according to one of Claims 1 to 13, in which method, after assembly of a joint outer part (2), a joint inner part (3) and a cage (10) has taken place, balls (6) are inserted into windows (13) which are formed on the cage (10) in the case of a joint which is over-articulated beyond the maximum operational articulation angle, **characterized in that**, in order to mount the balls (6), the joint (1) is over-articulated beyond the maximum operating articulation angle in such a way that a web (14) of the cage (10), which web (14) is situated between two windows (13), protrudes the furthest out of a joint opening (7), and that balls (6) are inserted into the windows (13) which adjoin, on both sides, the web (14) which protrudes the furthest.

**Revendications**

1. Joint homocinétique fixe, comprenant :

- une partie extérieure de joint (2) comprenant une pluralité de pistes de roulement de billes (4) sur sa périphérie intérieure,
- une partie intérieure de joint (3) comprenant une pluralité de pistes de roulement de billes (5) sur sa périphérie extérieure,
- une cage (10) avec une pluralité de fenêtres (13), disposée entre la partie extérieure de joint (2) et la partie intérieure de joint (3), et
- des billes (6) qui sont disposées à chaque fois dans une fenêtre (13) de la cage (10) et qui sont en prise avec les pistes de roulement de billes (4, 5) de la partie extérieure de joint (2) et de la partie intérieure de joint (3) en vue du transfert de couple,
**caractérisé en ce que**
l'angle de fléchissement fonctionnel maximal du joint est supérieur à 40 degrés et la longueur moyenne b des fenêtres de la cage (13) dans la direction périphérique de la cage (10) par rapport à la largeur i des fenêtres de la cage (13) est inférieure à 1,23.

2. Joint homocinétique fixe selon la revendication 1, **caractérisé en ce que** sur la partie extérieure du joint (2) et/ou sur la partie intérieure du joint (3), des possibilités d'écartement pour les billes (6) sont réalisées sur les pistes de roulement des billes (4, 5), lesquelles se situent à l'extérieur du lieu de résidence des billes (6) que celles-ci peuvent atteindre à l'intérieur de l'angle de fléchissement fonctionnel maximal, mais à l'intérieur du lieu de résidence des billes (6) que celles-ci peuvent atteindre au maximum dans le cas d'un sur-fléchissement du joint dans une position prévue pour le montage des billes, afin de permettre, en cas de sur-fléchissement du joint dans une position prévue pour le montage des billes, d'écarter les billes concernées (6) dans la direction radiale et/ou dans la direction périphérique par rapport à un prolongement imaginaire des pistes de roulement des billes (4, 5).

3. Joint homocinétique fixe selon la revendication 2, **caractérisé en ce que** les possibilités d'écartement de la partie extérieure du joint (2) sont formées par des évidements (15) se raccordant aux pistes de roulement des billes (4) de la partie extérieure du joint (2), lesquels évidements sont élargis par rapport aux pistés de roulement des billes (4) de la partie extérieure du joint (2) à la fois radialement et aussi dans la direction périphérique, afin de permettre, en cas de sur-fléchissement du joint dans une position prévue pour le montage des billes, d'écarter les billes concernées (6), par rapport à un prolongement imaginaire des pistes de roulement des billes (4), radialement vers l'extérieur et dans la direction périphérique.

4. Joint homocinétique fixe selon la revendication 3, **caractérisé en ce que** les évidements (15) de la partie extérieure du joint (2) sont réalisés sous forme de calottes.

5. Joint homocinétique fixe selon la revendication 2, **caractérisé en ce que** les possibilités d'écartement de la partie intérieure du joint (3) sont formées par des évidements se raccordant aux pistes de roulement des billes (5) de la partie intérieure du joint (3), lesquels évidements sont élargis par rapport aux pistes de roulement des billes (5) de la partie intérieure du joint (3) à la fois radialement et aussi dans la direction périphérique, afin de permettre, en cas de sur-fléchissement du joint dans une position prévue pour le montage des billes, d'écarter les billes concernées (6), par rapport à un prolongement imaginaire des pistes de roulement des billes (5), radialement vers l'extérieur et dans la direction périphérique.

6. Joint homocinétique fixe selon l'une quelconque des revendications 2 à 5, **caractérisé en ce que** les possibilités d'écartement ou les évidements (15) sont dimensionnés de telle sorte que lorsque le joint est sur-fléchi dans la position de montage des billes (6), au moins deux billes (6) adjacentes dans la direction périphérique soient déviées par rapport au prolongement imaginaire des pistes de roulement.

7. Joint homocinétique fixe selon l'une quelconque des revendications 2 à 6, **caractérisé en ce que** le joint présente une ouverture de joint (7) et les possibilités d'écartement ou les évidements (15) sur la partie extérieure du joint (2) au niveau du côté opposé de l'ouverture du joint (7) se raccordent aux pistes de roulement de billes (4) de la partie extérieure du joint (2).

8. Joint homocinétique fixe selon l'une quelconque des revendications 2 à 7, **caractérisé en ce que** le joint présente une ouverture de joint (7) et les possibilités d'écartement ou les évidements sur la partie intérieure du joint (3) se raccordent aux pistes de roulement de billes (5) de la partie intérieure du joint (3) sous forme d'enlèvements de matière au niveau du côté de l'ouverture du joint (7).

9. Joint homocinétique fixe selon l'une quelconque des revendications 1 à 8, **caractérisé en ce que** la partie extérieure du joint (2) présente, sur sa périphérie intérieure, une surface de guidage de cage (9) avec une contre-dépouille.

10. Joint homocinétique fixe selon l'une quelconque des revendications 1 à 9, **caractérisé en ce que** l'angle de fléchissement fonctionnel maximal est supérieur à 47°.

11. Joint homocinétique fixe selon l'une quelconque des revendications 1 à 10, **caractérisé en ce que** l'angle de fléchissement fonctionnel maximal du joint est supérieur à 40 degrés et la longueur moyenne b des fenêtres de cage (13) dans la direction périphérique de la cage (10) par rapport à la largeur i des fenêtres de cage (13) est inférieure à 1,21.

12. Joint homocinétique fixe selon l'une quelconque des revendications 1 à 11, **caractérisé en ce que** toutes les fenêtres (13) présentent la même longueur de fenêtre et sont disposées les unes par rapport aux autres de manière équidistante dans la direction périphérique.

13. Joint homocinétique fixe selon l'une quelconque des revendications 1 à 12, **caractérisé en ce que** les pistes de roulement de billes (5) de la partie intérieure du joint (3) sont séparées dans la direction périphérique par des nervures (18) et lorsque le joint (1) n'est pas fléchi, dans un plan (E) tendu par les centres des billes (6), 1 condition suivante au niveau de la partie intérieure du joint (3) est respectée :

pour PCD inférieur ou égal à 62 mm : $\varepsilon/\gamma > 1,6$ et
pour PCD supérieur à 62 mm : $\varepsilon/\gamma > 1,8$ où
PCD est le diamètre du cercle partiel passant par
les centres des billes,
$\varepsilon$ est l'angle incluant la piste de roulement des billes (5) (angle de piste de roulement) entre les points d'intersection du diamètre des billes avec un diamètre extérieur imaginaire de la partie intérieure par rapport au point d'intersection de l'axe du joint avec ledit plan (E) et
$\gamma$ est l'angle incluant la nervure (18) (angle de nervure) entre les points d'intersection du diamètre des billes avec le diamètre extérieur de la partie intérieure imaginaire par rapport au point d'intersection de l'axe du joint avec ledit plan (E).

14. Procédé pour le montage d'un joint homocinétique fixe selon l'une quelconque des revendications 1 à 13, dans lequel, après l'assemblage d'une partie extérieure du joint (2), d'une partie intérieure du joint (3) et d'une cage (10), des billes (6) sont insérées dans des fenêtres (13) réalisées sur la cage (10) lorsque le joint est sur-fléchi au-delà de l'angle de fléchissement fonctionnel maximal, **caractérisé en ce que** pour le montage des billes (6), le joint (1) est sur-fléchi au-delà de l'angle de fléchissement fonctionnel maximal de telle sorte qu'une nervure (14) de la cage (10) se trouvant entre deux fenêtres (13) fasse saillie le plus loin hors d'une ouverture du joint (7) et **en ce que** des billes (6) sont introduites dans les fenêtres (13) adjacentes des deux côtés à la nervure (14) faisant saillie le plus loin.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005029042 A1
- DE 19843632 A1
- DE 4234488 C1
- WO 2004090365 A1
- GB 2269439 A
- DE 102004062843 A1
- DE 10260172 A1